# NEUE EUROPÄISCHE PATENTSCHRIFT

(11) **EP 1 610 016 B2**
(45) Veröffentlichungstag und Bekanntmachung des Hinweises auf die Entscheidung über den Einspruch: **16.11.2011**
(45) Hinweis auf die Patenterteilung: 31.12.2008
(21) Anmeldenummer: 05012087.2
(22) Anmeldetag: 04.06.2005
(51) Int. Cl.: F16D 21/06

(54) **Drehmomentübertragungseinrichtung**
Torque transmitting arrangement
Agencement de transmission du couple

(30) Priorität: 21.06.2004 DE 102004029776
(43) Veröffentlichungstag der Anmeldung: 28.12.2005
(73) Patentinhaber: Schaeffler Technologies GmbH & Co. KG, 91074 Herzogenaurach (DE)
(72) Erfinder: Vetter, Christoph, 76131 Karlsruhe (DE); Indlekofer, Norbert, 77815 Bühl (DE); Walter, Bernhard, 77704 Oberkirch (DE)

(56) Entgegenhaltungen:
- EP-A- 1 174 631
- EP-A1- 1 522 753
- EP-A1- 1 582 765
- EP-A2- 1 178 239
- WO-A2-03/087608
- DE-A1- 4 117 582
- DE-A1- 10 115 454
- DE-A1- 10 146 837
- DE-A1- 10 310 831
- DE-A1- 19 800 490
- DE-A1- 19 921 687
- DE-T2- 69 506 324
- US-A1- 2003 079 953
- US-B1- 6 397 996
- 'HÜTTE-28.Auflage (1954)',

## Beschreibung

Die Erfindung betrifft eine Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, insbesondere zwei Getriebeeingangswellen, mit mindestens einer Kupplungseinrichtung und mit mindestens einer ein Eingangsteil und ein Ausgangsteil aufweisenden Schwingungsdämpfungseinrichtung, die zwischen die Abtriebswelle der Antriebseinheit und die Kupplungseinrichtung geschaltet ist, wobei die Kupplungseinrichtung einen Kupplungsgehäuseabschnitt, insbesondere einen Kupplungsdeckel, aufweist, der das die Kupplungseinrichtung aufnehmende Volumen begrenzt und sich an einem Getriebegehäuseabschnitt abstützt, wobei die Schwingungsdämpfungseinrichtung in dem von dem Kupplungsgehäuseabschnitt begrenzten, die Kupplungseinrichtung aufnehmenden Volumen angeordnet ist.

Drehmomentübertragungseinrichtungen der eingangs beschriebenen Art sind beispielsweise durch die DE 101 46 837 A1 und die EP 1 174 631 A2 bekannt geworden.

Aufgabe der Erfindung ist es, eine vorab beschriebene, bezüglich des Bauraums optimierte Drehmomentübertragungseinrichtung zu schaffen, die einfach aufgebaut und kostengünstig herstellbar ist.

Die Aufgabe ist bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, insbesondere zwei Getriebeeingangswellen, mit mindestens einer Kupplungseinrichtung und mit mindestens einer ein Eingangsteil und ein Ausgangsteil aufweisenden Schwingungsdämpfungseinrichtung, die zwischen die Abtriebswelle der Antriebseinheit und die Kupplungseinrichtung geschaltet ist, wobei die Kupplungseinrichtung einen Kupplungsgehäuseabschnitt, insbesondere einen Kupplungsdeckel, aufweist, der das die Kupplungseinrichtung aufnehmende Volumen begrenzt und sich an einem Getriebegehäuseabschnitt abstützt, wobei die Schwingungsdämpfungseinrichtung in dem von dem Kupplungsgehäuseabschnitt begrenzten, die Kupplungseinrichtung aufnehmenden Volumen angeordnet ist, dadurch gelöst, dass das Eingangsteil der Schwingungsdämpfungseinrichtung in radialer Richtung an dem Kupplungsgehäuseabschnitt gelagert ist und das Ausgangsteil der Schwingungsdämpfungseinrichtung, beziehungsweise das Eingangsteil der Kupplungseinrichtung in radialer Richtung an dem Kupplungsabschnitt abgestützt ist. Bei der Schwingungsdämpfungseinrichtung handelt es sich vorzugsweise um ein Zweimassenschwungrad. Durch die erfindungsgemäße Lagerung der Schwingungsdämpfungseinrichtung können Lagereinrichtungen zwischen dem Eingangsteil und/oder dem Ausgangsteil der Schwingungsdämpfungseinrichtung und der Getriebeeingangswelle oder der Abtriebswelle der Brennkraftmaschine entfallen. Außerdem wird die Toleranzkette von der Abtriebswelle der Brennkraftmaschine zur Getriebeeingangswelle reduziert.

Vorteilhaft kann es sein, wenn die Schwingungsdämpfungseinrichtung radial außerhalb und in axialer Richtung überlappend zu der Kupplungseinrichtung angeordnet ist. Dadurch kann in axialer Richtung Bauraum eingespart werden.

Vorteilhaft kann es sein, wenn das Eingangsteil der Schwingungsdämpfungseinrichtung einen Schwingungsdämpfungseinrichtungskäfig umfasst, in dem Federeinrichtungen zumindest teilweise aufgenommen sind, in die das Ausgangsteil der Schwingungsdämpfungseinrichtung eingreift. Ein im Wesentlichen kreisringscheibenförmiges Verbindungsteil, das von dem Schwingungsdämpfungseinrichtungskäfig ausgeht, ist, in axialer Richtung betrachtet, vorzugsweise zwischen dem Kupplungsgehäuseabschnitt und der Kupplungseinrichtung angeordnet.

Ein bevorzugtes Ausführungsbeispiel der Drehmomentübertragungseinrichtung ist **dadurch gekennzeichnet, dass** das Eingangsteil der Schwingungsdämpfungseinrichtung an ein Nabenteil angeschweißt ist, das in radialer Richtung an dem Kupplungsgehäuseabschnitt gelagert ist. Das Nabenteil kann auch einstückig mit dem Eingangsteil der Schwingungsdämpfungseinrichtung ausgebildet sein.

Ein weiteres bevorzugtes Ausführungsbeispiel der Drehmomentübertragungseinrichtung ist **dadurch gekennzeichnet, dass** das Nabenteil ein Nabenlagerteil umfasst, das innen konisch ausgebildet und mit einer Innenverzahnung ausgestattet ist, die sich mit einer Außenverzahnung in Eingriff befindet, die an einem Kopplungsteil ausgebildet ist, das einen Abschnitt aufweist, der komplementär zu dem Konus des Nabenlagerteils ausgebildet ist. Über die konischen, miteinander in Eingriff befindlichen verzahnten Abschnitte wird eine lösbare Befestigung des Kopplungsteils an dem Nabenteil ermöglicht.

Ein weiteres bevorzugtes Ausführungsbeispiel der Drehmomentübertragungseinrichtung ist dadurch gekennzeichnet, dass das Kopplungsteil insbesondere mit Hilfe einer Schraubverbindung wiederholt zerstörungsfrei trennbar an dem Nabenlagerteil befestigt ist. Das Kopplungsteil kann aber auch einstückig mit dem Nabenteil ausgebildet oder mit diesem verschweißt sein.

Ein weiteres bevorzugtes Ausführungsbeispiel der Drehmomentübertragungseinrichtung ist dadurch gekennzeichnet, dass das Ausgangsteil der Schwingungsdämpfungseinrichtung insbesondere sowohl in axialer als auch in radialer Richtung an dem Nabenteil gelagert ist. Zu diesem Zweck kann an dem Nabenteil eine im Wesentlichen kreisringscheibenförmige Vertiefung vorgesehen sein, die einen rechteckförmigen Querschnitt aufweist und in die eine im Wesentlichen komplementär ausgebildete Erhöhung eingreift, die an dem Ausgangsteil ausgebildet ist.

Ein weiteres bevorzugtes Ausführungsbeispiel der Drehmomentübertragungseinrichtung ist dadurch gekennzeichnet, dass die Kupplungseinrichtung eine nass laufende Kupplungsanordnung, insbesondere eine Lamellen-Kupplungsanordnung, umfasst. Vorzugsweise umfasst die Kupplungseinrichtung zwei nass laufende Lamellen-Kupplungsanordnungen.

Ein weiteres bevorzugtes Ausführungsbeispiel der Drehmomentübertragungseinrichtung ist dadurch gekennzeichnet, dass zwei nass laufende Kupplungsanordnungen koaxial und in axialer Richtung überlappend zueinander angeordnet sind. Dadurch kann in axialer Richtung Bauraum eingespart werden.

Bei einem Antriebsstrang eines Kraftfahrzeugs ist die vorab angegebene Aufgabe durch den Einbau einer vorab beschriebenen Drehmomentübertragungseinrichtung gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Drehmomentübertragungseinrichtung gemäß einem ersten Ausführungsbeispiel im Halbschnitt;
- Figur 2: einen vergrößerten Ausschnitt einer erfindungsgemäßen Drehmomentübertragungseinrichtung gemäß einem weiteren Ausführungsbeispiel im Längsschnitt und
- Figur 3: eine erfindungsgemäße Drehmomentübertragungseinrichtung gemäß einem weiteren Ausführungsbeispiel im Halbschnitt.

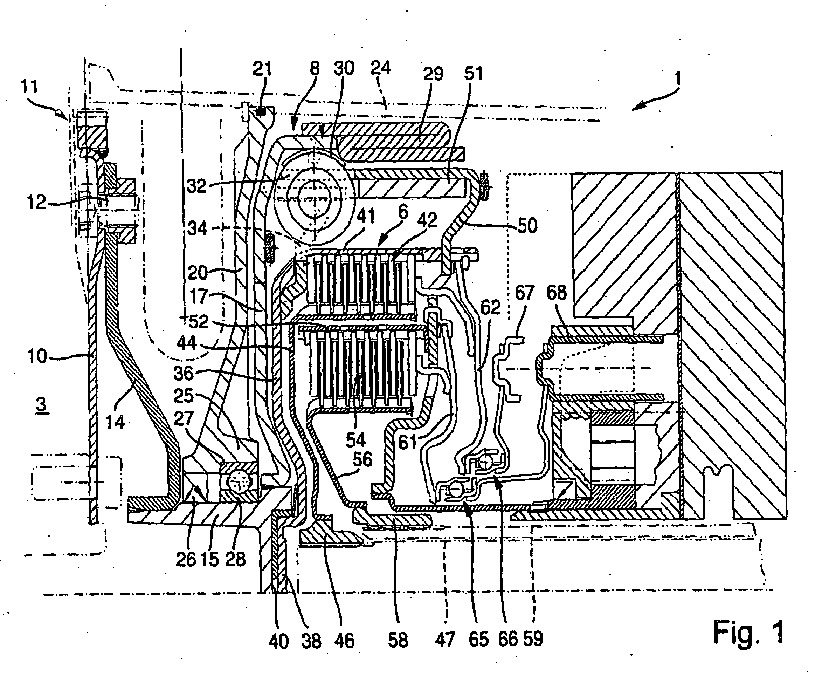

In Figur 1 ist ein Teil eines Antriebsstrangs 1 eines Kraftfahrzeugs dargestellt. Zwischen einer Antriebseinheit 3, insbesondere einer Brennkraftmaschine, und einem Getriebe 5 ist eine nass laufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Eine (nicht dargestellte) Abtriebswelle der Antriebseinheit 3 ist mit einem Antriebsausgangsteil 10 gekoppelt. Das Antriebsausgangsteil 10 hat im Wesentlichen die Gestalt einer sich in radialer Richtung erstreckenden Kreisringscheibe, an die radial außen ein Anlasserzahnkranz 11 angeschweißt ist. Das Antriebsausgangsteil 10 ist über eine Schraubverbindung 12 (von mehreren Schraubverbindungen, die über den Umfang des Antriebsausgangsteils 10 gleichmäßig verteilt angeordnet sind) mit einem Verbindungsteil 14 drehfest verbunden. Radial innen ist an das Verbindungsteil 14 ein Nabenteil 15 angeschweißt, an das wiederum ein Eingangsteil 17 der Schwingungsdämpfungseinrichtung 8 angeschweißt ist. Radial außerhalb des Nabenteils 15 und in axialer Richtung zwischen dem Verbindungsteil 14 und dem Eingangsteil 17 der Schwingungsdämpfungseinrichtung 8 ist ein Kupplungsdeckel 20 angeordnet, der sich im Wesentlichen in radialer Richtung erstreckt. Der Kupplungsdeckel 20 ist, unter Zwischenschaltung einer Dichtung 21, an einem Getriebegehäuseabschnitt 24 abgestützt, der in Figur 1 gestrichelt dargestellt ist. Der Getriebeabschnitt 24 und der daran abgestützte Kupplungsdeckel 20 sind feststehend an der Tragstruktur eines Kraftfahrzeugs angebracht.

Der Kupplungsdeckel 20 weist radial innen einen im Wesentlichen kreiszylindermantelförmigen Lagerkörper 25 auf. Auf der der Antriebseinheit 3 zugewandten Seite ist zwischen dem Lagerkörper 25 des Kupplungsdeckels 20 und dem Nabenteil 15 eine Dichteinrichtung 26, insbesondere ein Radialwellendichtring, angeordnet. Auf der dem Getriebe 5 zugewandten Seite ist zwischen dem Lagerkörper 25 des Kupplungsdeckels 20 und dem Nabenteil 15 eine Radiallagereinrichtung 28, insbesondere ein Rillenkugellager, angeordnet. Die Radiallagereinrichtung 28 stützt sich in axialer Richtung zu der Antriebseinheit 3 hin an einem Absatz 27 ab, der radial innen etwa in der Mitte des Lagerkörpers 25 des Kupplungsdeckels 20 umläuft. Durch die Radiallagereinrichtung 28 ist das Nabenteil 15 an dem Kupplungsdeckel 20 gelagert. Durch die Abstützung an dem Absatz 27 des Lagerkörpers 25 des Kupplungsdeckels 20 wird ebenfalls eine Abstützung in axialer Richtung zur Antriebseinheit 3 hin ermöglicht.

Radial außen an dem Eingangsteil 17 der Schwingungsdämpfungseinrichtung 8 ist eine Zusatzmasse 29 befestigt. Die Befestigung der Zusatzmasse 29 an dem Eingangsteil 17 der Schwingungsdämpfungseinrichtung 8 erfolgt vorzugsweise durch eine Schweißverbindung, wie in Figur 1 angedeutet ist. Außerdem ist an dem Eingangsteil 17 der Schwingungsdämpfungseinrichtung 8 ein Schwingungsdämpfungskäfig 30 befestigt, in dem mehrere Federeinrichtungen 32, die sich in Umfangsrichtung erstrecken, aufgenommen sind. In die Federeinrichtungen 32 greift ein Ausgangsteil 34 der Schwingungsdämpfungseinrichtung 8 ein, das in Figur 1 gestrichelt dargestellt ist. Das Ausgangsteil 34 ist an einem Verbindungsteil 36 befestigt, welches das Kupplungseingangsteil bildet. Das Ausgangsteil 34 der Schwingungsdämpfungseinrichtung 8 kann auch einstückig mit dem Kupplungseingangsteil 36 ausgebildet sein. Das Kupplungseingangsteil 36 geht radial innen in einen Lagertopf 38 über, der in einer komplementär ausgebildeten Lagerausnehmung 40, die auf der dem Getriebe 5 zugewandten Seite des Nabenteils 15 vorgesehen ist, sowohl in radialer als auch in axialer Richtung gelagert beziehungsweise zur Antriebseinheit 3 hin abgestützt.

Das Kupplungseingangsteil 36 ist einstückig mit einem Außenlamellenträger 41 einer ersten Lamellen-Kupplungsanordnung 42 verbunden. Radial innerhalb des Außenlamellenträgers 41 ist ein Innenlamellenträger 44 angeordnet, der an einem Nabenteil 46 befestigt ist. Das Nabenteil 46 der ersten Lamellen-Kupplungsanordnung 42 ist drehfest mit einer ersten Getriebeeingangswelle 47 verbunden.

Das Kupplungseingangsteil 36 ist über ein Verbindungsteil 50, an dem radial außen eine Zusatzmasse 51 befestigt ist, drehfest mit einem Außenlamellenträger 52 einer zweiten Lamellen-Kupplungsanordnung 54 verbunden, die radial innerhalb der ersten Lamellen-Kupplungsanordnung 42 angeordnet ist. Die beiden Lamellen-Kupplungsanordnungen 42 und 54 überlappen sich in axialer Richtung vollständig. Die zweite Lamellen-Kupplungsanordnung 54 weist einen Innenlamellenträger 56 auf, der an einem Nabenteil 58 befestigt ist. Das Nabenteil 58 ist drehfest mit einer zweiten Getriebeeingangswelle 59 verbunden, die als Hohlwelle ausgebildet ist. In der Hohlwelle 59 ist die erste Getriebeeingangswelle 47 drehbar angeordnet.

Die beiden Lamellen-Kupplungsanordnungen 54 und 42 werden über Betätigungshebel 61 und 62 betätigt, deren radial inneren Enden sich an Betätigungslagern 65, 66 abstützen. Die Betätigungslager 65 und 66 werden mit Hilfe von Betätigungskolben 67, 68 in axialer Richtung betätigt. Die Betätigungskolben 67 und 68 sind gegenüber den sich mit dem Kupplungseingangsteil 36 drehenden Betätigungshebeln 61 und 62 feststehend angeordnet.

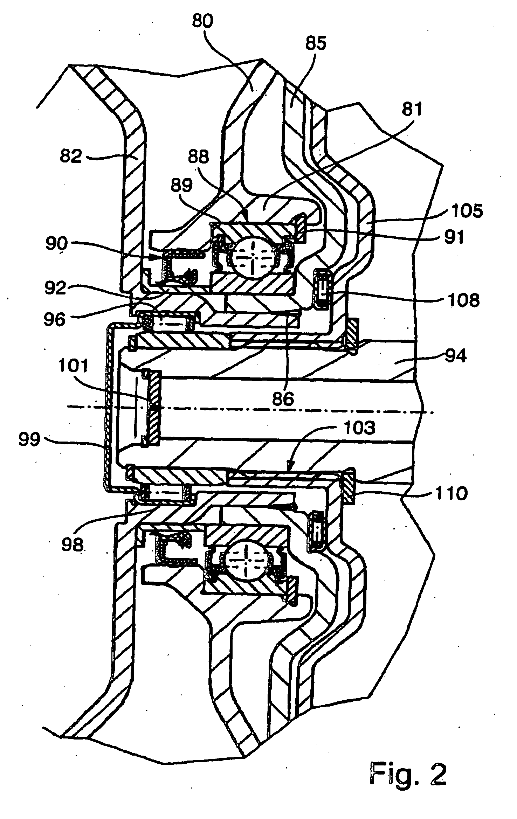

In Figur 2 ist ein Ausschnitt eines Kupplungsdeckels 80 im Längsschnitt dargestellt, der radial innen einstückig mit einem Lagerkörper 81 verbunden ist. Der Kupplungsdeckel 80 ist zwischen zwei Verbindungsteilen 82 und 85 angeordnet, die, bezogen auf den Kupplungsdeckel 80 radial innen durch eine Schweißnaht 86 aneinander befestigt sind. Die Schweißnaht 86 befindet sich radial innen teilweise unter einer Lagereinrichtung 88, die, in radialer Richtung betrachtet, zwischen dem Lagerkörper 81 des Kupplungsdeckels 80 und den sich in axialer Richtung erstreckenden Befestigungsabschnitten der Verbindungsteile 82 und 85 angeordnet ist. Bei der Lagereinrichtung 88 handelt es sich um ein Rillenkugellager, das in axialer Richtung sowohl an dem Kupplungsdeckel 80 als auch an den Verbindungsteilen 82 und 85 abgestützt ist. Das Rillenkugellager 88 stützt sich radial außen in axialer Richtung an einem Absatz 89 ab, der radial innen an dem Lagerkörper 81 vorgesehen ist. Auf der entgegengesetzten Seite stützt sich das Rillenkugellager 88 radial außen an einer Stützringscheibe 91 ab, die in axialer Richtung an dem Lagerkörper 81 fixiert ist, indem sie teilweise in einer in dem Lagerkörper 81 radial innen umlaufenden Nut aufgenommen ist. Radial innen stützt sich das Rillenkugellager 88 in einer axialen Richtung an einem Fixierelement 92 aus gehärtetem Material ab. Das Fixierelement 92 wiederum stützt sich in axialer Richtung an dem Verbindungsteil 82 ab. In der entgegengesetzten radialen Richtung stützt sich das Rillenkugellager 88 radial innen an dem Verbindungsteil 85 ab. Außerdem ist zwischen dem Lagerkörper 81 des Kupplungsdeckels 80 und dem sich in axialer Richtung erstreckenden Befestigungsabschnitt des Verbindungsteils 82 ein Radialwellendichtring 90 angeordnet.

Radial innerhalb der Verbindungsteile 82 und 85 ist eine Getriebeeingangswelle 94 mit Hilfe einer Radiallagereinrichtung 96 drehbar gelagert. Zwischen dem Verbindungsteil 82 und der Radiallagereinrichtung 96 ist eine Hülse 98 aus gehärtetem Material angeordnet. Die Hülse 98 ist einstückig mit einer Abschlusswand 99 verbunden, die am Ende der innen hohlen Getriebeeingangswelle 94 in einem geringen Abstand zu dieser angeordnet ist. Das offene Ende der Getriebeeingangswelle 94 ist durch eine Blende 101 verschlossen, durch die Schmiermittel aus dem Inneren der Getriebeeingangswelle 94 zu der Lagereinrichtung 96 gelangen kann.

Die Getriebeeingangswelle 94 ist über eine Verzahnung 103 drehfest mit einem Ausgangsteil 105 einer Kupplungseinrichtung oder einer Schwingungsdämpfungseinrichtung verbunden. In axialer Richtung zwischen dem Ausgangsteil 105 und dem Verbindungsteil 85 ist eine Axiallagereinrichtung 108 angeordnet. Durch einen Sicherungsring 110, der teilweise in einer Nut in der Getriebeeingangswelle 94 angeordnet ist, wird die Getriebeeingangswelle 94 in einer axialen Richtung relativ zu dem Ausgangsteil 105 fixiert. Das Verbindungsteil 82 ist drehfest mit einer (nicht dargestellten) Abtriebswelle einer Antriebseinheit, insbesondere einer Brennkraftmaschine, verbunden. Bei dem Verbindungsteil 85 handelt es sich um das Eingangsteil einer Schwingungsdämpfungseinrichtung.

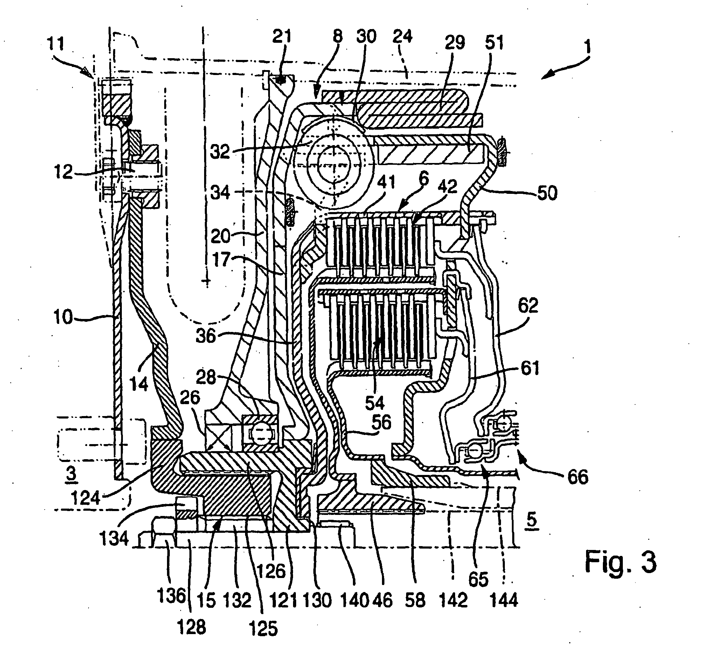

In Figur 3 ist ein ähnliches Ausführungsbeispiel einer erfindungsgemäßen Drehmomentübertragungseinrichtung wie in Figur 1 dargestellt. Zur Bezeichnung gleicher oder ähnlicher Teile werden die gleichen Bezugszeichen verwendet. Um Wiederholungen zu vermeiden, wird auf die vorangegangene Beschreibung der Figur 1 verwiesen. Im Folgenden wird nur auf die Unterschiede zwischen den beiden Ausführungsbeispielen eingegangen.

Bei dem in Figur 3 dargestellten Ausführungsbeispiel ist das Nabenteil 15 nicht einstückig sondern zweiteilig ausgebildet. Das Nabenteil 15 umfasst ein Nabenlagerteil 121, das lösbar, das heißt wiederholt zerstörungsfrei trennbar, drehfest an einem Nabenlagerteil 121 befestigbar ist. Das Nabenlagerteil 121 weist einen konusförmigen Abschnitt 125 auf, der sich zum Getriebe hin verjüngt. Der konusförmige Abschnitt 125 ist darüber hinaus mit einer Innenverzahnung ausgestattet. Das Kopplungsteil 124 weist einen konusförmigen Abschnitt 126 auf, der komplementär zu dem konusförmigen Abschnitt 125 des Nabenlagerteils 121 ausgebildet ist. Der konusförmige Abschnitt 126 des Kopplungsteils 124 ist mit einer Außenverzahnung ausgestattet, die sich mit der Innenverzahnung des Nabenlagerteils 121 in Eingriff befindet. Durch die konusförmige Gestalt wird eine spielfreie Befestigung des Kopplungsteils 124 an dem Nabenlagerteil 121 gewährleistet.

Das Kopplungsteil 124 ist mit Hilfe eines Gewindebolzens 128 an dem Nabenlagerteil 121 in axialer Richtung fixiert. An dem dem Getriebe zugewandten Ende des Gewindebolzens 128 ist ein Absatz 130 vorgesehen, mit dem sich der Gewindebolzen 128 an dem dem Getriebe zugewandten Ende des Nabenlagerteils 121 abstützt. In radialer Richtung zwischen dem Gewindebolzen 128 und dem Kopplungsteil 124 ist eine Gewindehülse 132 mit einem Außengewinde in ein komplementäres Innengewinde des Kopplungsteils 124 eingeschraubt. Die Gewindehülse 132 stützt sich mit ihrem dem Getriebe zugewandten Ende an dem Nabenlagerteil 121 ab. An ihrem dem Getriebe abgewandten Ende weist die Gewindehülse 132 einen Bund 134 auf, an dessen dem Getriebe abgewandten Seite eine Mutter 136 anliegt, die auf das dem Getriebe abgewandten Ende des Gewindebolzens 128 aufgeschraubt ist. An dem dem Getriebe zugewandten Ende des Gewindebolzens 128 ist ein Radiallager 140 vorgesehen, durch das eine innere Getriebeeingangswelle 142 indirekt an dem Nabenlagerteil 121 gelagert ist. Die innere Getriebeeingangswelle 142 ist drehbar in einer hohlen äußeren Getriebeeingangswelle 144 angeordnet.

### Bezugszeichenliste

- 1,: Antriebsstrang
- 2.- 3.: Antriebseinheit => Brennkraftmaschine
- 4.- 5.: Getriebe
- 6.: Doppelkupplung
- 7. - 8.: Schwingungsdämpfungseinrichtung
- 9. - 10.: Antriebsausgangsteil
- 11.: Anlasserzahnkranz
- 12.: Schraubverbindung
- 13. - 14.: Verbindungsteil
- 15.: Nabenteil
- 16. - 17.: Eingangsteil von 8
- 18. - 19.- 20.: Kupplungsdeckel
- 21.: Dichtung
- 22.- 23.- 24.: Getriebegehäuseabschnitt gestrichelt
- 25.: Lagerkörper von 20
- 26.: Dichteinrichtung
- 27.: Absatz
- 28.: Rillenkugellager
- 29.: Zusatzmasse
- 30.: Schwingungsdämpfungskäfig
- 31. - 32.: Federeinrichtung
- 33. - 34.: Ausgangsteil
- 35.- 36.: Verbindungsteil => Kupplungseingangsteil
- 37. - 38.: Lagertopf
- 39.- 40.: Lagerausnehmung
- 41.: Außenlamellenträger
- 42.: erste Lamellen-Kupplungsanordnung
- 43. - 44.: Innenlamellenträger
- 45.- 46.: Nabenteil
- 47.: erste Getriebeeingangswelle
- 48.- 49.- 50.: Verbindungsteil
- 51.: Zusatzmasse
- 52.: Außenlamellenträger
- 53. - 54.: zweite Lamellen-Kupplungsanordnung
- 55.- 56.: Innenlamellenträger
- 57. 58.: Nabenteil
- 59.: zweite Getriebeeingangswelle => Hohlwelle
- 60.- 61.: Betätigungshebel
- 62.: Betätigungshebel
- 63.- 64.- 65.: Betätigungslager
- 66.: Betätigungslager
- 67.: Betätigungskolben
- 68.: Betätigungskolben
- 69.- 70.- 71.- 72.- 73.- 74.- 75.- 76.- 77.- 78.- 79.- 80.: Kupplungsdeckel
- 81.: Lagerkörper
- 82.: Verbindungsteil
- 83.- 84.- 85.: Verbindungsteil => Eingangsteil
- 86.: Schweißnaht
- 87.- 88.: Rillenkugellager
- 89.: Absatz
- 90.: Radialwellendichtring
- 91.: Stützringscheibe
- 92.: Fixierelement
- 93.- 94.: Getriebeeingangswelle => Hohlwelle
- 95.- 96.: Radiallager => Nadellager
- 97.- 98.: Hülse aus gehärtetem Material
- 99.: Abschlusswand
- 100. - 101.: Blende
- 102.- 103.: Verzahnung
- 104. - 105.: Ausgangsteil
- 106.- 107.- 108.: Axiallager
- 109.- 110.: Sicherungsring
- 111.- 112.- 113.- 114.- 115.- 116.- 117.- 118.- 119.- 120.- 121.: Nabenlagerteil
- 122.- 123.- 124.: Kupplungsteil
- 125.: konusförmiger Abschnitt
- 126.: konusförmiger Abschnitt
- 127.- 128.: Gewindebolzen
- 129.- 130.: Absatz
- 131.- 132.: Gewindehülse
- 133.- 134.: Bund
- 135.- 136.: Mutter
- 137.- 138.- 139.- 140.: Radiallager
- 141.- 142.: innere Getriebeeingangswelle
- 143..- 144.: äußere Getriebeeingangswelle => Hohlwelle

## Patentansprüche

1. Drehmomentübertragungseinrichtung im Antriebsstrang eines Kraftfahrzeugs zur Drehmomentübertragung zwischen einer Antriebseinheit (3), insbesondere einer Brennkraftmaschine, mit einer Abtriebswelle, insbesondere einer Kurbelwelle, und einem Getriebe (5) mit mindestens einer Getriebeeingangswelle (94), insbesondere zwei Getriebeeingangswellen (47,59), mit mindestens einer Kupplungseinrichtung (6) und mit mindestens einer ein Eingangsteil (17) und ein Ausgangsteil (34) aufweisenden Schwingungsdämpfungseinrichtung (8), die zwischen die Abtriebswelle der Antriebseinheit (3) und die Kupplungseinrichtung (6) geschaltet ist, wobei die Kupplungseinrichtung (6) einen Kupplungsgehäuseabschnitt (20), insbesondere einen Kupplungsdeckel, aufweist, der das die Kupplungseinrichtung (6) aufnehmende Volumen begrenzt und sich an einem Getriebegehäuseabschnitt (24) abstützt, wobei die Schwingungsdämpfungseinrichtung (8) in dem von dem Kupplungsgehäuseabschnitt (20) begrenzten, die Kupplungseinrichtung (6) aufnehmenden Volumen angeordnet ist, **dadurch gekennzeichnet, dass** das Eingangsteil (17) der Schwingungsdämpfungseinrichtung (8) in radialer Richtung an dem Kupplungsgehäuseabschnitt (20) gelagert ist und das Ausgangsteil (34) der Schwingungsdämpfungseinrichtung (8) beziehungsweise das Eingangsteil (36, 38) der Kupplungseinrichtung (6) in radialer Richtung an dem Kupplungsabschnitt (20) abgestützt ist.

2. Drehmomentübertragungseinrichtung nach Anspruch 1, **dadurch gekennzeichnet, dass** die Schwingungsdämpfungseinrichtung (8) radial außerhalb und in axialer Richtung überlappend zu der Kupplungseinrichtung (6) angeordnet ist.

3. Drehmomentübertragungseinrichtung nach einem der vorhergehenden Ansprüche, **dadurch gekennzeichnet, dass** das Eingangsteil (17) der Schwingungsdämpfungseinrichtung (8) einen Schwingungsdämpfungseinrichtungskäfig (30) umfasst, in dem Federeinrichtungen (32) zumindest teilweise aufgenommen sind, in die das Ausgangsteil (34) der Schwingungsdämpfungseinrichtung (8) eingreift.

4. Drehmomentübertragungseinrichtung nach einem der vorhergehenden Ansprüche, **dadurch gekennzeichnet, dass** das Eingangsteil (17) der Schwingungsdämpfungs-einrichtung (8) an ein Nabenteil (15) angeschweißt ist, das in radialer Richtung an dem Kupplungsgehäuseabschnitt (20) gelagert ist.

5. Drehmomentübertragungseinrichtung nach Anspruch 4, **dadurch gekennzeichnet, dass** das Nabenteil (15) ein Nabenlagerteil (121) umfasst, das innen konisch ausgebildet und mit einer Innenverzahnung ausgestattet ist, die sich mit einer Außenverzahnung in Eingriff befindet, die an einem Kopplungsteil (124) ausgebildet ist, das einen Abschnitt aufweist, der komplementär zu dem Konus des Nabenlagerteils (121) ausgebildet ist.

6. Drehmomentübertragungseinrichtung nach Anspruch 5, **dadurch gekennzeichnet, dass** das Kopplungsteil (124) insbesondere mit Hilfe einer Schraubverbindung (128, 136) wiederholt zerstörungsfrei trennbar an dem Nabenlagerteil (121) befestigt ist.

7. Drehmomentübertragungseinrichtung nach einem der Ansprüche 4 bis 6, **dadurch gekennzeichnet, dass** das Ausgangsteil (34,36, 38) der Schwingungsdämpfungseinrichtung (8) insbesondere sowohl in axialer als auch in radialer Richtung an dem Nabenteil (15) gelagert ist.

8. Drehmomentübertragungseinrichtung nach einem der vorhergehenden Ansprüche, **dadurch gekennzeichnet, dass** die Kupplungseinrichtung (6) eine nass laufende Kupplungsanordnung (42,54), insbesondere eine Lamellen-Kupplungsanordnung, umfasst.

9. Drehmomentübertragungseinrichtung nach einem der vorhergehenden Ansprüche, **dadurch gekennzeichnet, dass** zwei nass laufende Kupplungsanordnungen (42,54) koaxial und in axialer Richtung überlappend zueinander angeordnet sind.

10. Antriebsstrang eines Kraftfahrzeugs mit einer Drehmomentübertragungseinrichtung nach einem der vorhergehenden Ansprüche.

## Claims

1. Torque transmission device in the drivetrain of a motor vehicle for torque transmission between a drive unit (3), in particular an internal combustion engine, having a drive output shaft, in particular a crankshaft, and a transmission (5) having at least one transmission input shaft (94), in particular two transmission input shafts (47, 59), having at least one clutch device (6) and having at least one vibration damping device (8) which has an input part (17) and an output part (34) and which is connected between the drive output shaft of the drive unit (3) and the clutch device (6), with the clutch device (6) having a clutch housing section (20), in particular a clutch cover, which clutch cover delimits the volume which accommodates the clutch device (6) and which clutch cover is supported on a transmission housing section (24), with the vibration damping device (8) being arranged in the volume which is delimited by the clutch housing section (20) and which accommodates the clutch device (6), **characterized in that** the input part (17) of the vibration damping device (8) is mounted in the radial direction on the clutch housing section (20), and the output part (34) of the vibration damping device (8), or the input part (36, 38) of the clutch device (6), is supported in the radial direction on the clutch section (20).

2. Torque transmission device according to Claim 1, **characterized in that** the vibration damping device (8) is arranged radially outside, and so as to axially overlap, the clutch device (6).

3. Torque transmission device according to one of the preceding claims, **characterized in that** the input part (17) of the vibration damping device (8) comprises a vibration damping device cage (30) in which spring devices (32) are at least partially held, into which spring devices (32) the output part (34) of the vibration damping device (8) engages.

4. Torque transmission device according to one of the preceding claims, **characterized in that** the input part (17) of the vibration damping device (8) is welded to a hub part (15) which is mounted in the radial direction on the clutch housing section (20).

5. Torque transmission device according to Claim 4, **characterized in that** the hub part (15) comprises a hub bearing part (121) which, at the inside, is formed so as to be conical and is fitted with an inner toothing which is in engagement with an outer toothing which is formed on a coupling part (124) which has a section of complementary design to the cone of the hub bearing part (121).

6. Torque transmission device according to Claim 5, **characterized in that** the coupling part (124) is fastened to the hub bearing part (121), in particular by means of a screw connection (128, 136), such that it may be repeatedly detached in a non-destructive fashion.

7. Torque transmission device according to one of Claims 4 to 6, **characterized in that** the output part (34, 36, 38) of the vibration damping device (8) is in particular mounted both in the axial and also in the radial direction on the hub part (15).

8. Torque transmission device according to one of the preceding claims, **characterized in that** the clutch device (6) comprises a wet-running clutch arrangement (42, 54), in particular a multi-plate clutch arrangement.

9. Torque transmission device according to one of the preceding claims, **characterized in that** two wet-running clutch arrangements (42, 54) are arranged coaxially with respect to one another and so as to overlap one another in the axial direction.

10. Drivetrain of a motor vehicle having a torque transmission device according to one of the preceding claims.

## Revendications

1. Dispositif de transfert de couple dans une chaîne de transmission d'un véhicule automobile pour le transfert de couple entre une unité d'entraînement (3), en particulier un moteur à combustion interne, comprenant un arbre de sortie, en particulier un vilebrequin, et une boîte de vitesses (5), comprenant au moins un arbre d'entrée de boîte de vitesses (94), en particulier deux arbres d'entrée de boîte de vitesses (47, 59), avec au moins un dispositif d'embrayage (6) et avec au moins un dispositif d'amortissement des oscillations (8) présentant une partie d'entrée (17) et une partie de sortie (34), qui est monté entre l'arbre de sortie de l'unité d'entraînement (3) et le dispositif d'embrayage (6), le dispositif d'embrayage (6) présentant une portion de carter d'embrayage (20), en particulier un couvercle d'embrayage, qui limite le volume recevant le dispositif d'embrayage (6) et qui s'appuie sur une portion du carter de boîte de vitesses (24), le dispositif d'amortissement des oscillations (8) étant disposé dans le volume limité par la portion de carter d'embrayage (20) et recevant le dispositif d'embrayage (6), **caractérisé en ce que**
la partie d'entrée (17) du dispositif d'amortissement des oscillations (8) est montée dans la direction radiale sur la portion de carter d'embrayage (20) et la partie de sortie (34) du dispositif d'amortissement des oscillations (8), respectivement la partie d'entrée (36, 38) du dispositif d'embrayage (6), est supportée dans la direction radiale sur la portion d'embrayage (20).

2. Dispositif de transfert de couple selon la revendication 1, **caractérisé en ce que** le dispositif d'amortissement des oscillations (8) est disposé radialement en dehors et dans la direction axiale de manière à chevaucher le dispositif d'embrayage (6).

3. Dispositif de transfert de couple selon l'une quelconque des revendications précédentes, **caractérisé en ce que** la partie d'entrée (17) du dispositif d'amortissement des oscillations (8) comprend une cage de dispositif d'amortissement des oscillations (30) dans laquelle sont reçus au moins en partie des dispositifs de ressort (32), dans lesquels la partie de sortie (34) du dispositif d'amortissement des oscillations (8) vient en prise.

4. Dispositif de transfert de couple selon l'une quelconque des revendications précédentes, **caractérisé en ce que** la partie d'entrée (17) du dispositif d'amortissement des oscillations (8) est soudée à une partie de moyeu (15) qui est montée dans la direction radiale sur la portion de carter d'embrayage (20).

5. Dispositif de transfert de couple selon la revendication 4, **caractérisé en ce que** la partie de moyeu (15) comprend une partie de palier de moyeu (121) qui est réalisée sous forme conique vers l'intérieur et qui est pourvue d'une denture interne, qui est en prise avec une denture externe qui est réalisée sur une partie d'accouplement (124) qui présente une portion qui est réalisée de manière complémentaire au cône de la partie de palier de moyeu (121).

6. Dispositif de transfert de couple selon la revendication 5, **caractérisé en ce que** la partie d'accouplement (124) est fixée en particulier à l'aide d'une connexion vissée (128, 136) séparable sans destruction de manière répétée, sur la partie de palier de moyeu (121).

7. Dispositif de transfert de couple selon l'une quelconque des revendications 4 à 6, **caractérisé en ce que** la partie de sortie (34, 36, 38) du dispositif d'amortissement des oscillations (8) est montée en particulier à la fois dans la direction axiale et dans la direction radiale sur la partie de moyeu (15).

8. Dispositif de transfert de couple selon l'une quelconque des revendications précédentes, **caractérisé en ce que** le dispositif d'embrayage (6) comprend un agencement d'embrayage humide (42, 54), en particulier un agencement d'embrayage à disques.

9. Dispositif de transfert de couple selon l'une quelconque des revendications précédentes, **caractérisé en ce que** deux agencements d'embrayage humides (42, 54) sont disposés coaxialement et en se chevauchent dans la direction axiale.

10. Chaîne de transmission d'un véhicule automobile comprenant un dispositif de transfert de couple selon l'une quelconque des revendications précédentes.
